(19) Europäisches Patentamt
European Patent Office
Office européen des brevets

(11) **EP 2 023 093 B1**

(12) **EUROPÄISCHE PATENTSCHRIFT**

(45) Veröffentlichungstag und Bekanntmachung des Hinweises auf die Patenterteilung:
**10.02.2016 Patentblatt 2016/06**

(51) Int Cl.:
***G01D 5/245*** *(2006.01)*     ***G01B 7/30*** *(2006.01)*

(21) Anmeldenummer: **08012443.1**

(22) Anmeldetag: **10.07.2008**

(54) **Drehgeber und Verfahren zu dessen Betrieb**

Rotary encoder and method for its operation

Encodeur et son procédé de fonctionnement

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **25.07.2007 DE 102007034815**
                 **25.06.2008 DE 102008030201**

(43) Veröffentlichungstag der Anmeldung:
**11.02.2009 Patentblatt 2009/07**

(73) Patentinhaber: **Dr. Johannes Heidenhain GmbH 83301 Traunreut (DE)**

(72) Erfinder: **Fischer, Peter 83253 Rimsting (DE)**

(56) Entgegenhaltungen:
**EP-B1- 0 724 712        WO-A1-2004/040320**
**WO-A1-2004/046735     DE-A1- 4 224 129**
**DE-A1-102005 006 419   DE-A1-102005 040 150**

EP 2 023 093 B1

**Beschreibung**

Die Erfindung betrifft einen Drehgeber gemäß dem Anspruch 1, sowie ein Verfahren zu dessen Betrieb gemäß dem Anspruch 18.

Derartige Drehgeber werden häufig zur Bestimmung der Winkellage zweier relativ zueinander drehbaren Maschinenteile verwendet. Häufig werden solche Drehgeber als Messgeräte zur Bestimmung der absoluten Winkellage, über mehrere Umdrehungen (Multiturn-Funktion) von entsprechenden Antriebswellen, eingesetzt. Die Drehbewegung wird dabei inkremental oder absolut erfasst. In Verbindung mit Zahnstangen und Zahnrädern oder mit Gewindespindeln lassen sich mit einer Winkelmesseinrichtung auch lineare Bewegungen messen.

Häufig erfolgt die exakte Bestimmung der Winkellage im Normalbetrieb durch eine optische Abtastung einer Teilscheibe, während zur Zählung der Umdrehungen der Antriebswelle ein magnetisches Abtastprinzip verwendet wird. Es ist grundsätzlich wünschenswert, dass eine Zählung der Umdrehungen von entsprechenden Antriebswellen auch erfolgt, wenn der Drehgeber nicht mit einer externen Spannungsquelle verbunden ist, z. B. wenn die Stromversorgung unterbrochen ist. Um diese Funktionalität bezüglich eines Notbetriebs zu erreichen, werden häufig Drehgeber mit so genannten Multiturn-Getrieben ausgestattet. Derartige Multiturn-Getriebe untersetzen die Drehbewegung der Antriebswelle. Beispielsweise durch ein magnetisches Messprinzip kann dann die Stellung eines Zahnrads im Multiturn-Getriebe abgetastet werden. Die Drehbewegung des entsprechenden Zahnrads erfolgt selbstredend auch bei unterbrochener Stromversorgung des Drehgebers, wenn sich die Antriebswelle z. B. durch Gravitationskräfte bewegt.

Aus der Patentanmeldung DE 10 2004 062 448 A1 ist ein Drehgeber bekannt, bei dem eine Vielzahl von Magnetpolsegmenten über den Umfang einer Welle angeordnet sind. Beim Vorbeiführen der Magnetpolsegmente an den freien Enden von Flusskonzentratoren erfolgt eine schlagartige Ummagnetisierung eines ferromagnetischen Elements, wodurch genügend elektrische Energie zur Aktivierung eines Zählspeichers bereitgestellt wird. Weiterhin ist aus der EP 0 724 712 B1 ein Drehwinkelsensor bekannt, mit dem unter Verwendung mehrerer Impulsdrähte und durch Nutzung logischer Verknüpfungen energieautark eine Winkelstellung bestimmt werden kann. Die aus dem Stand der Technik bekannten Drehgeber haben unter anderem den Nachteil, dass sie nur vergleichsweise aufwändig herstellbar und teuer in der Fertigung sind.

Der vorliegenden Erfindung liegt die Aufgabe zu Grunde, einen Drehgeber zu schaffen, der bedingt durch seine Konstruktion und sein Wirkungsprinzip vergleichsweise kostengünstig herstellbar ist.

Diese Aufgabe wird erfindungsgemäß durch die Merkmale des Anspruches 1 bzw. 16 gelöst.

Demnach umfasst der erfindungsgemäße Drehgeber eine erste Bauteilgruppe, z. B. einen Stator, und eine zweite Bauteilgruppe, etwa einen Rotor, wobei die Bauteilgruppen relativ um eine Achse zueinander drehbar angeordnet sind. Die erste Bauteilgruppe weist einen Auslösesensor, etwa einen Impulsdraht mit einem Rücksetzmagneten, sowie mehrere Magnetsensoren, die bezüglich der Achse in Umfangsrichtung versetzt angeordnet sind auf. Die zweite Bauteilgruppe umfasst mindestens jeweils einen ersten Magneten, einen zweiten Magneten und einen dritten Magneten.

Die Bauteilgruppen sind zudem so konfiguriert, dass bei einer relativen Drehung der beiden Bauteile um mindestens eine volle Umdrehung von den Magnetsensoren das jeweilige Magnetfeld des ersten Magneten und des dritten Magneten detektierbar ist, wobei durch den zweiten Magneten und den dritten Magneten jeweils ein Triggersignal vom Auslösesensor erzeugbar ist, während ein Auslösen des Triggersignals vom Auslösesensor durch den ersten Magneten unterbleibt.

Unter einer vollen Umdrehung ist eine relative Änderung der Drehstellung der Bauteilgruppen von 360° gemeint, das heißt, dass bei einer vollen Umdrehung beispielsweise ein Punkt des Rotors einem Punkt des Stators sowohl am Beginn der Drehbewegung als auch am Ende der Drehbewegung gegenüber liegt. Die zweite Bauteilgruppe kann eine Welle, insbesondere eine Hohlwelle mit einer zentralen Bohrung aufweisen.

Als Auslösesensoren kann ein magnetempfindliches unipolares Element beispielsweise ein Impulsdraht oder ein Hall-Element verwendet werden.

Das Detektieren der Magnetfelder geschieht jeweils immer dann, wenn sich ein Magnet in der Nähe eines Magnetsensors befindet, bzw. sich die Wirkbreite eines Magneten im Bereich eines Magnetsensors befindet. Das Auslösen eines Triggersignals erfolgt, wenn sich dem betreffenden Auslösesensor infolge der relativen Drehbewegung ein geeigneter Magnet nähert, bzw. wenn der Magnet und der Auslösesensor innerhalb eines Triggerbereiches einander gegenüber liegen.

In weiterer Ausgestaltung der Erfindung können die Baugruppen auch so konfiguriert sein, dass bei einer relativen Drehung der beiden Bauteile um mindestens eine volle Umdrehung von den Magnetsensoren auch das Magnetfeld des zweiten Magneten detektierbar ist.

Die Magnetsensoren, welche insbesondere als MR- oder Hall-Elemente ausgestaltet sein können, sind omnipolar sensitiv. Das heißt, dass die Magnetsensoren auf Magnetfelder reagieren, unabhängig von der Richtung des betreffenden Magnetfeldes.

Der Auslösesensor umfasst einen Impulsdraht und einen Rücksetzmagneten. Der Rücksetzmagnet ist so orientiert, dass dieser eine Richtungskomponente parallel zur Längserstreckung des Impulsdrahts aufweist. Weiterhin sind dann die Bauteilgruppen so konfiguriert, dass durch den zweiten Magneten und durch den dritten Magneten als Triggersignal ein Spannungsimpuls vom Impulsdraht erzeugbar ist, während ein Auslösen eines Spannungsimpulses vom Impulsdraht durch den ersten Magneten unterbleibt.

Der Rücksetzmagnet, bzw. dessen Polausrichtung, ist dabei so orientiert, dass dieser eine Richtungskomponente parallel zur Längserstreckung des Impulsdrahts aufweist.

Der Rücksetzmagnet hat also eine Polausrichtung, die eine Richtungskomponente parallel zur Längserstreckung des Impulsdrahts aufweist. Demgemäß ist in diesem Zusammenhang der Begriff "orientiert" auf die Polausrichtung bezogen, wobei die Polausrichtung die Richtung der Verbindungslinie zwischen den Magnetpolen darstellt.

In weiterer Ausgestaltung der Erfindung kann der Impulsdraht mit einer Richtungskomponente parallel zur Achse angeordnet sein. Dies ist insbesondere vorteilhaft, wenn die zweiten und / oder- dritten Magnete mantelseitig an der zweiten Bauteilgruppe des Drehgebers angeordnet sind. Mit Vorteil kann dann in diesem Fall die zweite Bauteilgruppe eine Hohlwelle mit einer zentralen Bohrung aufweisen.

Abweichend davon umfasst die Erfindung aber auch Drehgeber, bei denen an der zweiten Bauteilgruppe radial ausgerichtete zweite und dritte Magneten vorliegen. In diesem Fall kann der Impulsdraht mit Vorteil auch radial ausgerichtet sein. Ebenso kann in diesem Fall auch der erste Magnet radial an der zweiten Bauteilgruppe befestigt sein.

Mit Vorteil sind die Polausrichtungen des zweiten Magneten und des dritten Magneten mit einer Richtungskomponente parallel zur Achse orientiert, während die des ersten Magneten mit einer Richtungskomponente antiparallel zur Achse orientiert ist. Das heißt, dass der erste Magnet im Wesentlichen gegenpolig im Vergleich zum zweiten und dritten Magneten magnetisiert sein kann. Weiterhin können der Rücksetzmagnet und der erste Magnet so orientiert sein, dass deren Polausrichtungen parallel sind.

Gemäß einer vorteilhaften Weiterbildung der Erfindung umfasst der Drehgeber jeweils zwei erste, zwei zweite und zwei dritte Magneten. Entsprechend kann bei dieser Ausführungsvariante auch von einer ersten, zweiten und dritten Gruppe von Magneten gesprochen werden. Mit Vorteil kann der Drehgeber auch jeweils vier erste, vier zweite und vier dritte Magnete aufweisen.

Im Übrigen kann der Drehgeber auch so ausgestaltet sein, dass ein Element der zweiten Bauteilgruppe, beispielsweise eine Welle, direkt mit jeweils entsprechender Polausrichtung lokal magnetisiert ist, so dass also keine separaten Magnete vorliegen.

In weiterer Ausgestaltung der Erfindung kann der Drehgeber eine elektronische Schaltung und ein nicht-flüchtiges Speicherelement umfassen. Dabei sind vier Flankenzustände und ein Zählerstand im Speicherelement speicherbar. Bei einem späteren Auftreten eines Triggersignals ist der Speicherinhalt aus dem Speicherelement auslesbar, so dass mit Hilfe der elektronischen Schaltung die relative Drehrichtung der Bauteilgruppen zueinander bestimmbar ist, sowie ein Zählimpuls durch die elektronische Schaltung erzeugbar ist. Basierend auf der Drehrichtung und dem Auftreten des Zählimpulses ist somit eine Änderung des Zählerstands im Speicherelement speicherbar.

Flankenzustände sind Zustände, die sich aus den jeweiligen Zuständen der Magnetsensoren ableiten und durch Gesetzmäßigkeit der Aussagelogik definiert werden. Entsprechend den verschiedenen Typen von Magneten, also den ersten, zweiten und dritten Magneten, können verschiedene Typen von Flankenzuständen definiert werde.

Mit Vorteil weist der dritte Magnet eine größere Wirkbreite auf als eine jeweilige Wirkbreite des ersten Magneten oder des zweiten Magneten. Unter Wirkbreite ist im Folgenden eine Bogenlänge oder ein Winkel zu verstehen. Wenn sich ein Magnet innerhalb des Bereiches der Wirkbreite gegenüber einem Magnetsensor oder dem Auslösesensor befindet, so kann der Magnet eine Reaktion des Magnetsensors oder des Auslösesensors, also ein Triggersignal, auslösen. Außerhalb der Wirkbreite ist vom betreffenden Magneten keine Reaktion des Magnetsensors oder des Auslösesensors auslösbar. In weiterer Ausgestaltung der Erfindung sind Triggerbereiche derart ausgestaltet, dass deren Ränder gegenüber den Flanken der Zustände der Magnetsensoren versetzt auftreten. Unter einem Triggerbereich ist im Folgenden ebenfalls eine Bogenlänge oder ein Winkel zu verstehen. Wenn sich ein Magnet innerhalb des Triggerbereiches gegenüber dem Auslösesensor befindet so kann der Magnet ein Triggersignal im Auslösesensors auslösen. Außerhalb des Triggerbereichs ist vom betreffenden Magneten kein Triggersignal vom Auslösesensor auslösbar.

Mit Vorteil ist die Wirkbreite des zweiten Magneten so groß wie dessen Triggerbereich und alternativ oder ergänzend die Wirkbreite des dritten Magneten so groß wie dessen Triggerbereich.

Gemäß einer vorteilhaften Ausgestaltung der Erfindung sind der erste Magnet gegenüber dem zweiten Magneten um einen ersten Winkel und der zweite Magnet gegenüber dem dritten Magneten um einen zweiten Winkel in Umfangsrichtung versetzt angeordnet und die beiden Winkel sind unterschiedlich groß.

Weiterhin kann der Drehgeber so ausgestaltet sein, dass bei einer relativen Drehung der beiden Bauteile um eine volle Umdrehung, ohne Überlappung der Anfangs- und Endpunkte, j Zählimpulse erzeugbar sind. Zudem beträgt dann der erste Winkel 95°/j $\pm$ 20°/j oder 360°/j - 95°/j $\pm$ 20°/j, mit Vorteil 95°/j $\pm$ 10°/j oder 360°/j - 95°/j $\pm$ 10°/j. Der zweite Winkel kann 133°/j $\pm$ 20°/j oder 360°/j - 133°/j 20°/j. insbesondere 133°/j $\pm$ 10°/j oder 360°/j - 133°/j $\pm$ 10°/j betragen.

In weiterer Ausgestaltung der Erfindung kann der Auslösesensor gegenüber einem der Magnetsensoren um einen Winkel von 133°/j $\pm$ 20°/j oder von 360°/j - 133°/j $\pm$ 20°/j in Umfangsrichtung versetzt angeordnet sein, mit Vorteil um einen Winkel von 133°/j ± 10°/j oder von 360°/j - 133°/j ± 10°/j. Überdies können die Magnetsensoren gegenüber einem Auslösesensor um einen weiteren Winkel von (38° ± 10°)/j oder von 360°/j - (38° ± 10°)/j in Umfangsrichtung versetzt angeordnet sein.

Weiterhin umfasst die Erfindung ein Verfahren zum Betrieb eines Drehgebers, der eine erste Bauteilgruppe und eine zweite Bauteilgruppe umfasst, wobei die Bauteilgruppen relativ um eine Achse zueinander drehbar angeordnet sind. Dabei weist die erste Bauteilgruppe einen Auslösesensor, etwa einen Impulsdraht mit einem Rücksetzmagneten, sowie mehrere Magnetsensoren, die bezüglich der Achse in Umfangsrichtung versetzt angeordnet sind auf. Die zweite Bauteilgruppe umfasst mindestens jeweils einen ersten Magneten, einen zweiten Magneten und einen dritten Magneten.

Die Bauteilgruppen sind zudem so konfiguriert sind, dass bei einer relativen Drehung der beiden Bauteile um mindestens eine volle Umdrehung von den Magnetsensoren das Magnetfeld des ersten Magneten und des dritten Magneten detektiert wird. Weiterhin wird durch den zweiten Magneten und den dritten Magneten ein Triggersignal vom Auslösesensor, etwa ein Spannungsimpuls vom Impulsdraht, erzeugt, während eine Erzeugung des Triggersignals vom Auslösesensor durch den ersten Magneten unterbleibt.

Gemäß einer weiteren Ausgestaltung des erfindungsgemäßen Verfahrens werden in einem nicht-flüchtigen Speicherelement zunächst vier Flankenzustände und ein Zählerstand gespeichert. Bei einem späteren Auftreten eines Spannungsimpulses bzw. Triggersignals werden diese Speicherinhalte, insbesondere die Flankenzustände, aus dem Speicherelement ausgelesen. Danach wird, basierend darauf (auf den Speicherinhalten) die relative Drehrichtung der Bauteilgruppen zueinander mit Hilfe einer elektronischen Schaltung bestimmt. Sodann wird in der Schaltung ein Zählimpuls erzeugt, so dass basierend auf der Drehrichtung und dem Zählimpuls eine Änderung des Zählerstands im Speicherelement gespeichert wird.

Mit Vorteil werden bei einer Umdrehung der beiden Bauteile zueinander zwei Zählimpulse erzeugt, das heißt bei einer Umdrehung ohne Überlappung der Anfangs- und Endpunkte, die also knapp vor Erreichen der Ausgangsstellung beendet ist.

Gerade für die Anwendung der Erfindung in einem Notbetrieb des Drehgebers ist es vorteilhaft, wenn der Energieinhalt des Spannungsimpulses für das Erzeugen eines Zählimpulses und das Abspeichern eines Zählerstandes in einem nicht-flüchtigen Speicherelement genutzt wird. Mit Vorteil kann in diesem Zusammenhang ein Speicherelement verwendet werden, welches auf der Basis von Kristallen mit ferroelektrischen Eigenschaften beruht. Derartige Speicherelemente benötigen relativ wenig elektrische Energie und werden häufig als FeRAM oder FRAM bezeichnet. Alternativ kann auch ein so genannter MRAM für diesen Zweck zum Einsatz kommen. Besonders vorteilhaft ist es jedenfalls, wenn Speicherelemente verwendet werden, die beliebig oft beschreibbar sind.

Alternativ oder ergänzend kann auch der Spannungsimpuls des Impulsdrahtes zum Aufschalten einer Versorgungsspannung, etwa einer Batterie genutzt werden.

Vorteilhafte Ausbildungen der Erfindung entnimmt man den abhängigen Ansprüchen.

Weitere Einzelheiten und Vorteile des erfindungsgemäßen Drehgebers und des Verfahrens ergeben sich aus der nachfolgenden Beschreibung von Ausführungsbeispielen, anhand der beiliegenden Figuren.

Es zeigen die

Figur 1      eine Seitenansicht auf einen Teil eines Drehgebers, gemäß einem ersten Ausführungsbeispiel,

Figur 2a      eine Querschnittansicht durch einen Teil des Drehgebers in einer ersten Drehstellung, gemäß dem ersten Ausführungsbeispiel,

Figur 2b      eine Querschnittansicht durch einen Teil des Drehgebers in einer zweiten Drehstellung gemäß dem ersten Ausführungsbeispiel,

Figur 2c      eine Querschnittansicht durch einen Teil des Drehgebers in einer dritten Drehstellung gemäß dem ersten Ausführungsbeispiel,

Figur 3a      eine Querschnittansicht durch einen Teil eines Drehgebers, gemäß einem zweiten Ausführungsbeispiel,

Figur 3b      eine Querschnittansicht durch einen Teil des Drehgebers, gemäß dem zweiten Ausführungsbeispiel,

Figur 3c      eine Querschnittansicht durch einen Teil des Drehgebers, gemäß dem zweiten Ausführungsbeispiel,

Figur 4      Signalverläufe der Magnetsensoren, sowie des Impulsdrahtes.

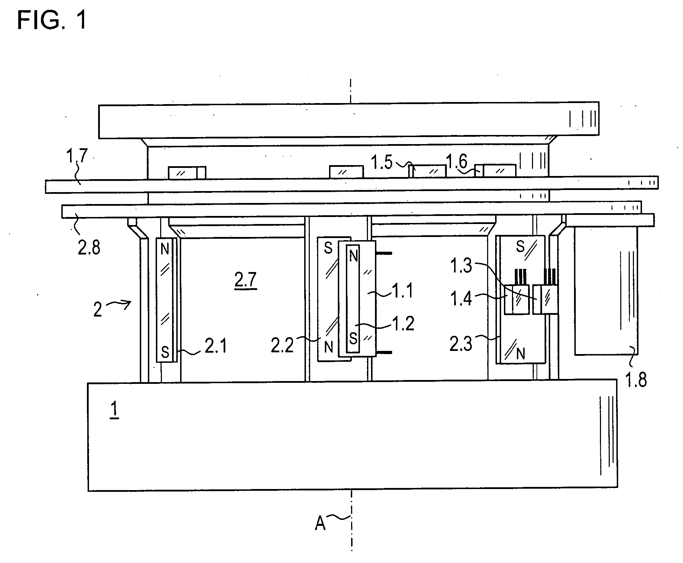

In der Figur 1 ist ein Teil eines Drehgebers gemäß einem ersten Ausführungsbeispiel dargestellt. Der Drehgeber weist eine erste Bauteilgruppe auf, die im vorgestellten Ausführungsbeispiel als Stator 1 dient. Um eine Achse A gegenüber dem Stator 1 drehbar ist als zweite Bauteilgruppe ein Rotor 2 angeordnet.

Der Stator 1 umfasst als Auslösesensor einen Impulsdraht 1.1 bzw. Wiegand-Sensor. Dieser besteht aus einer speziellen Legierung mit einem hartmagnetischen Metall als Mantel und einem weichmagnetischen Metall als Kern. Sobald ein äußeres Magnetfeld eine bestimmt Feldstärke überschreitet, kommt es zu einer sprunghaften Ummagnetisierung des Kerns, wodurch ein Spannungsimpuls in einer Spule des Impulsdrahts 1.1 induziert wird, bzw. der Impulsdraht 1.1 einen Spannungsimpuls auslöst.

Parallel zur Längserstreckung des Impulsdrahts 1.1 ist ein Rücksetzmagnet 1.2 angeordnet. Dabei ist der Rücksetzmagnet 1.2 so stark, dass, sobald sich ein äußeres Magnetfeld mit entsprechender Polarität vom Impulsdraht 1.1 wieder entfernt, die Anwesenheit des Rücksetzmagneten 1.2 ein Zurücksetzen des Impulsdrahts 1.1 auslöst.

Weiterhin umfasst der Stator 1 zwei Magnetsensoren, die als MR-Elemente 1.3, 1.4 ausgestaltet sind. Die MR-Elemente 1.3, 1.4 sind omnipolar sensitiv, das heißt, dass diese auf Magnetfelder reagieren unabhängig von deren Polarität.

Die jeweiligen Zustände S1.3, S1.4 der MR-Elemente 1.3, 1.4 werden einer Schaltung, hier ein ASIC-Baustein 1.5, zugeführt und von diesem ausgewertet. Der ASIC-Baustein 1.5 ist auf einer Leiterplatte 1.7 montiert, die drehfest mit dem Stator verbunden ist. Unter anderem befindet sich auf der Leiterplatte 1.7 außerdem ein nicht-flüchtiges Speicherelement, das im gezeigten Ausführungsbeispiel als ein FeRAM-Speicherelement 1.6 ausgestaltet ist.

Der Drehgeber gemäß dem Ausführungsbeispiel arbeitet im Normalbetrieb nach einem optischen Prinzip. Aus diesem Grund ist am Stator 1 eine optoelektronische Sensoreinheit 1.8 angeordnet, welche unter anderem eine Lichtquelle und Fotodetektoren umfasst.

Durch die optoelektronische Sensoreinheit 1.8 kann im Normalbetrieb eine Teilscheibe 2.8, die drehfest mit einer Hohlwelle 2.7 des Rotors 2 verbunden ist und somit relativ zum Stator 1 drehbar ist, im Auflichtverfahren abgetastet werden, zur Bestimmung der exakten relativen Winkellage zwischen Stator 1 und Rotor 2. Die Hohlwelle 2.7 dient zur drehfesten Aufnahme einer Motorwelle, deren Drehbewegung vom Drehgeber erfasst werden soll.

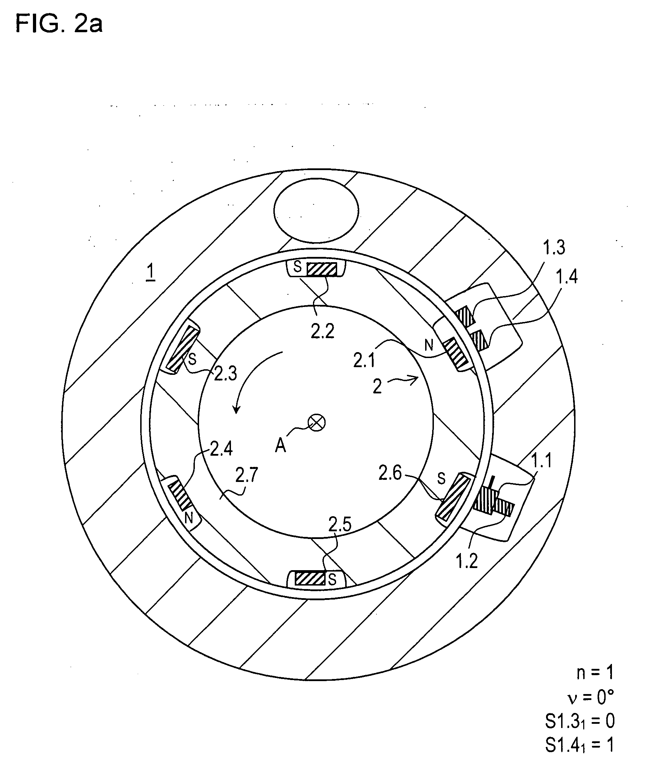

Neben der Teilscheibe 2.8 weist der Rotor 2 mehrere Magnete auf, die entsprechend ihrer Funktion in drei Gruppen eingeteilt werden können. Die erste Gruppe stellen die beiden Passivmagnete 2.1, 2.4 dar (siehe auch die Figuren 2a - 2c). Die Passivmagneten 2.1, 2.4 sind parallel zur Achse A mantelseitig am Rotor 2 befestigt, wobei die Pole bezüglich der Achse A versetzt angeordnet sind bzw. die Verbindungslinien der Pole parallel zur Achse A orientiert sind. Dabei ist der Nordpöt der Passivmagneten 2.1, 2.4 in der Figur 1 oben angeordnet, wie dies auch beim Rücksetzmagneten 1.2 der Fall ist. Der Rücksetzmagnet 1.2 und die Passivmagneten 2.1, 2.4 sind demnach so orientiert, dass deren Polausrichtungen parallel sind.

Als zweite Gruppe von Magneten befinden sich so genannte Zählmagnete 2.2, 2.5 am Rotor 2. Weiterhin sind als dritte Gruppe von Magneten Hilfsmagnete 2.3, 2.6 am Rotor 2 befestigt. Die Polausrichtungen der Zählmagnete 2.2, 2.5 und der Hilfsmagnete 2.3, 2.6 sind identisch und magnetisch antiparallel bzw. entgegengesetzt zur Polausrichtung der Passivmagnete 2.1, 2.4. Entsprechend ihrer Polausrichtung ist durch die Zählmagnete 2.2, 2.5 und die Hilfsmagnete 2.3, 2.6 ein Spannungsimpuls vom Impulsdraht 1.1 erzeugbar, während ein Auslösen eines Spannungsimpulses vom Impulsdraht 1.1 durch die Passivmagneten 2.1, 2.4 unterbleibt, weil dessen Polausrichtung nicht dazu geeignet ist den vom Rücksetzmagneten 1.2 zurückgesetzten Impulsdraht 1.1 derart zu aktiveren, dass dieser einen Spannungsimpuls erzeugen würde.

Andererseits sind die Magnetfelder der Passivmagnete 2.1, 2.4, der Zählmagnete 2.2, 2.5 und der Hilfsmagnete 2.3, 2.6 sämtlich von den omnipolar sensitiven MR-Elementen 1.3, 1.4 detektierbar. Mit anderen Worten sind diese Magnetfelder in der Lage die Zustände S1.3, S1.4 der MR-Elemente 1.3, 1.4 zu verändern.

Wenn nun der Drehgeber z. B. auf Grund eines Stromausfalls aus seinem Normalbetrieb genommen wird, wird er automatisch in einen Notbetriebmodus versetzt. In diesem Notbetriebmodus kommt es lediglich darauf an, dass einzelne Umdrehungen gezählt und abgespeichert werden, damit bei Wiederaufnahme des Normalbetriebs umgehend die genaue Drehstellung der Hohlwelle 2.7 bestimmt werden kann, unter Berücksichtigung der im Notbetriebmodus erfolgten Umdrehungen. Im vorgestellten Ausführungsbeispiel werden im Notbetriebmodus pro Umdrehung der Hohlwelle 2.7 zwei Zählimpulse erzeugt, so dass hier quasi halbe Umdrehungen gezählt werden. Anhand der Figuren 2a bis 2c und der Tabellen I bis III sein die Funktionsweise des Drehgebers im Notbetriebmodus erläutert. Es wird dabei davon ausgegangen, dass sich der Rotor 2 relativ zum Stator 1 entgegen dem Uhrzeigersinn stetig dreht. Die Ansicht in den Figuren 2a bis 2c entspricht weitgehend einer Schnittdarstellung der Figur 1, wobei diese Schnittdarstellung von oben betrachtet wird. Entsprechend liegen die Südpole der Zählmagnete 2.2, 2.5 und die Hilfsmagnete 2.3, 2.6 in der Zeichenebene, während bei den Passivmagneten 2.1, 2.4 der Nordpol in der Zeichenebene zu liegen kommt.

In der Figur 2a ist der Rotor 2 in einer ersten Drehstellung mit dem Winkel $\nu = 0°$ gezeigt, in der sich der Hilfsmagnet 2.6 in der Nähe des Impulsdrahtes 1.1 befindet, durch die Annäherung des Hilfsmagneten 2.6 und dessen Polausrichtung wird vom Impulsdraht 1.1 ein Spannungsimpuls ausgelöst. Im Folgenden wird diesem Ereignis die Ordnungszahl 1 zugewiesen, das heißt, dass definitionsgemäß in der Figur 2a der erste Spannungsimpuls ausgelöst wird und somit der laufende Index n auf 1 gesetzt wird. In der Drehstellung gemäß der Figur 2a liegt zudem ein Passivmagnet 2.1 dem zweiten Magnetsensor 1.4 gegenüber, während der erste Magnetsensor 1.3 kein Magnetfeld detektiert.

Da die Magnetsensoren 1.3, 1.4 onmipolar sensitiv sind, sprechen diese grundsätzlich auch auf die Magnetfelder der Passivmagneten 2.1, 2.4 an. In der vorliegenden Drehstellung liefert somit der Magnetsensor 1.4 ein Signal.

$S1.3_n = S1.3_1 = 0$ und $S1.4_n = S1.4_1 = 1$.

Nachdem der Rotor 2 die Drehstellung mit dem Winkel v= 0° erreicht hat, wird kein Zählimpuls P ausgelöst, so dass

$P_1 = 0$

gilt. Zusätzlich werden so genannte Hilfsmagnetenflankenzustände $F1_n$, $F2_n$ auf die Werte

$F1_1 = 0$ und $F2_1 = 1$

gesetzt. Des Weiteren nehmen so genannte Zählmagnetenflankenzustände $Z1_n$, $Z2_n$ die Werte

$Z1_1 = 0$ und $Z2_1 = 1$

an. Die Werte für den Zählimpuls $P_1$, die Hilfsmagnetenflankenzustände $F1_n$, $F2_n$ und für Zählmagnetenflankenzustände $Z1_n$, $Z2_n$ resultieren aus dem vorhergehenden Zuständen n-1, wie weiter unten noch erläutert wird.

Die Werte von $F1_1$, $F2_1$, $Z1_1$, $Z2_1$ werden im ASIC-Baustein 1.5 gebildet und dann im FeRAM-Speicherelement 1.6 gespeichert. Da in der Stellung n = 1 (v ≈ 0°) der Zustand des Zählimpulses $P_1 = 0$ ist, wird der Zählerstand unverändert im Speicherelement belassen. Für den gesamten Vorgang einschließlich der Speicherung im FeRAM-Speicherelement 1.6 wird von außen keine elektrische Energie zugeführt. Der Energieinhalt des Spannungsimpulses wird hier zur Versorgung der elektronischen Elemente genutzt, so dass der Drehgeber im Notbetrieb energieautark arbeitet. Entsprechend den verschiedenen Typen von Magneten, hier also die Zählmagnete 2.2, 2.5 und Hilfsmagnete 2.3, 2.6, können verschiedene Typen von Flankenzuständen, hier Zählmagnetenflankenzustand $Z1_n$, $Z2_n$, Hilfsmagnetenflankenzustand $F1_n$, $F2_n$ definiert werden.

Wenn sich nun der Rotor 2 entgegen dem Uhrzeigersinn weiter dreht, entfernt sich der Hilfsmagnet 2.6 vom Impulsdraht 1.1 und dessen Domänen werden durch den Rücksetzmagneten 1.2 vollständig zurück geklappt, so dass ein darauf folgendes Auslösen eines Spannungsimpulses grundsätzlich nur durch einen der Zählmagnete 2.2, 2.5 oder einen der Hilfsmagnete 2.3, 2.6 möglich ist.

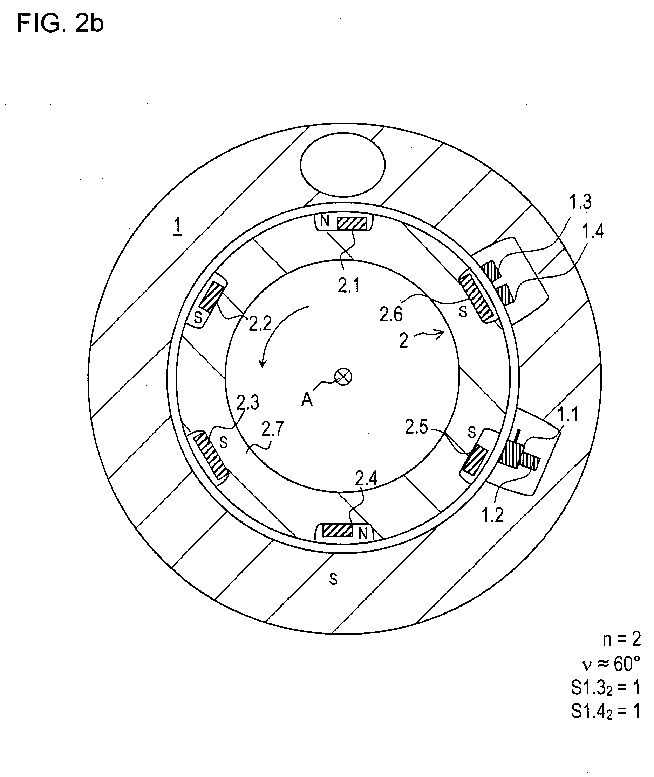

In der Figur 2b ist dieser Fall gezeigt, wobei nun der Rotor 2 um etwa 60° gegenüber der Drehstellung gemäß der Figur 2a verdreht ist. Durch den Zählmagneten 2.5, dessen Polausrichtung parallel zu derjenigen des Hilfsmagneten 2.6 orientiert ist, wird vom Impulsdraht 1.1 ein zweiter Spannungsimpuls ausgelöst, so dass also n = 2 gesetzt werden kann. Entsprechend wird nun wieder im ASIC-Baustein 1.5 eine logische Abfrage gestartet. Da sich nun beide Magnetsensoren 1.3, 1.4 dem Hilfsmagneten 2.6 gegenüber befinden, werden der Magnetsensor 1.3 und der Magnetsensor 1.4 in die Zustände

$S1.3_2 = 1$ und $S1.4_2 = 1$

versetzt. Mit Hilfe der Tabelle III kann zunächst ermittelt werden, ob ein Zählimpuls ausgelöst werden muss oder nicht, und ob eine Bestimmung der Drehrichtung in diesem Zustand möglich ist. Nachdem die Zustände $S1.3_2 = 1$ und $S1.4_2 = 1$ der Magnetsensoren 1.3, 1.4 bekannt sind und weiterhin $Z1_1 = 0$, $Z2_1 = 1$, sowie $F1_1 = 0$, $F2_1 = 1$, ergibt sich $P_2 = 1$. Für das vorliegende Beispiel trifft also die elfte Zeile von unten der Tabelle III zu (siehe Hervorhebung durch Ellipse), so dass also eindeutig festgestellt wird, dass sich der Rotor 2 gegen den Uhrzeigersinn dreht (Spalte R = ccw, counterclockwise) und ein Zählimpuls erfolgen muss (Spalte P =1). Der Zählimpuls wird innerhalb des ASIC-Baustein 1.5 an eine Zählschaltung weitergeleitet. Danach wird der aktuelle Zählerstand vom ASIC-Baustein 1.5 an das FeRAM-Speicherelement 1.6 übergeben und dort abgespeichert.

Entsprechend der festgestellten Drehrichtung wird im Übrigen der Zählerstand bei der Bedingung P = 1 um ein Inkrement erhöht oder reduziert.

Mit der Kenntnis, dass $P_2 = 1$ ist, können aus der Tabelle I nun zur Behandlung des nächsten Auslöseereignis eines Spannungsimpulses die aktuellen Werte für die Hilfsmagnetenflankenzustände $F1_2$, $F2_2$ ermittelt werden (siehe Hervorhebung durch Ellipse):

$P_2 = 1$; $S1.3_2 = 1$, $S1.4_2 = 1$; $F1_1 = 0$, $F2_1 = 1$ => $F1_2 = 0$, $F2_2 = 0$

Ebenso können unter Verwendung der Tabelle II die aktuellen Werte der Zählmagnetenflankenzustände $Z1_2$, $Z2_2$ bestimmt werden (siehe Hervorhebung durch Ellipse):

$S1.3_2 = 1$, $S1.4_2 = 1$; $Z1_1 = 0$, $Z2_1 = 1$ => $Z1_2 = 0$, $Z2_2 = 1$

Ganz allgemein, für alle Drehstellungen und Drehrichtungen, wird die Bestimmung der Werte von $F1_n$, $F2_n$, $Z1_n$, $Z2_n$ im ASIC-Baustein 1.5 vorgekommen, indem nach den Regeln der Aussagelogik folgende Bedingungen überprüft werden:

$$F1_n = (invP \wedge F1_{n-1} \wedge invF2_{n-1}) \vee (invS1.3_n \wedge invS1.4_n \wedge invF1_{n-1} \wedge invF2_{n-1}) \vee (invP \wedge invS1.3_n \wedge invS1.4_n \wedge F1_{n-1})$$

$$F2_n = (invP \wedge invF1_{n-1} \wedge F2_{n-1}) \vee (invS1.3_n \wedge S1.4_n \wedge invF1_{n-1} \wedge invF2_{n-1}) \vee (invP \wedge invS1.3_n \wedge S1.4_n \wedge F2_{n-1})$$

$$Z1_n = (S1.3_n \wedge inv\, S1.4_n) \vee (inv\, S1.3_n \wedge Z1_{n-1} \wedge inv\, Z2_{n-1})$$

$$Z2_n = (S1.3_n \wedge S1.4_n) \vee (invS1.3_n \wedge invZ1_{n-1} \wedge Z2_{n-1})$$

$$cw = (S1.3_n \wedge invS1.4_n \wedge invZ1_{n-1} \wedge Z2_{n-1} \wedge invF1_{n-1} \wedge invF2_{n-1}) \vee (S1.3_n \wedge invS1.4_n \wedge invZ1_{n-1} \wedge Z2_{n-1} \wedge invF1_{n-1} \wedge F2_{n-1}) \vee (S1.3_n \wedge invS1.4_n \wedge invZ1_{n-1} \wedge Z2_{n-1} \wedge F1_{n-1} \wedge invF2_{n-1}) \vee (S1.3_n \wedge invS1.4_n \wedge Z1_{n-1} \wedge invZ2_{n-1} \wedge F1_{n-1} \wedge invF2_{n-1}) \vee (invS1.3_n \wedge invS1.4_n \wedge invZ1_{n-1} \wedge Z2_{n-1} \wedge invF1_{n-1} \wedge invF2_{n-1}) \vee (S1.3_n \wedge invS1.4_n \wedge Z1_{n-1} \wedge invZ2_{n-1} \wedge invF1_{n-1} \wedge F2_{n-1})$$

$$ccw = (S1.3_n \wedge S1.4_n \wedge invZ1_{n-1} \wedge Z2_{n-1} \wedge invF1_{n-1} \wedge F2_{n-1}) \vee (S1.3_n \wedge S1.4_n \wedge Z1_{n-1} \wedge invZ2_{n-1} \wedge invF1_{n-1} \wedge invF2_{n-1}) \vee (S1.3_n \wedge S1.4_n \wedge Z1_{n-1} \wedge invZ2_{n-1} \wedge invF1_{n-1} \wedge F2_{n-1}) \vee (S1.3_n \wedge S1.4_n \wedge Z1_{n-1} \wedge invZ2_{n-1} \wedge F1_{n-1} \wedge invF2_{n-1}) \vee (invS1.3_n \wedge S1.4_n \wedge Z1_{n-1} \wedge invZ2_{n-1} \wedge invF1_{n-1} \wedge invF2_{n-1}) \vee (S1.3_n \wedge S1.4_n \wedge invZ1_{n-1} \wedge Z2_{n-1} \wedge F1_{n-1} \wedge invF2_{n-1})$$

$$P = ccw \vee cw$$

Wenn sich der Rotor 2 weiterhin entgegen dem Uhrzeigersinn dreht, passiert zunächst der Passivmagnet 2.4 den Impulsdraht 1.1. Dies löst jedoch keinen Spannungsimpuls aus, weil der Passivmagnet 2.4 antiparallel zu den Zählmagneten 2.2, 2.5 und Hilfsmagneten 2.3, 2.6 magnetisiert ist. Wenn kein Spannungsimpuls auftritt, wird keine logische Abfrage begonnen und die bereits abgespeicherten Werte verbleiben unverändert im FeRAM-Speicherelement 1.6.

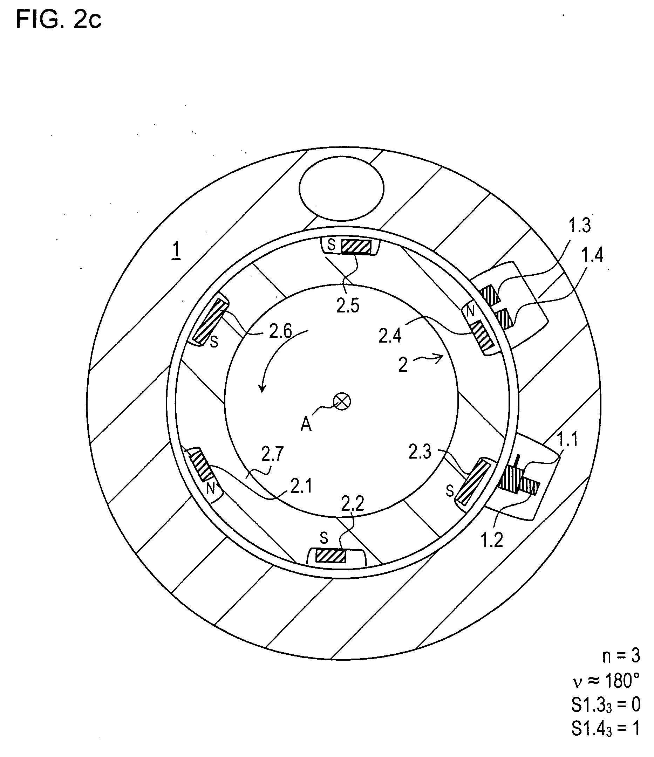

Erst in einer Drehstellung gemäß Figur 2c, mit $v \approx 180°$ wird der nächste Spannungsimpuls ausgelöst, so dass nunmehr n = 3 vorliegt. Die Logik des ASIC-Bausteins 1.5 fragt nun den jeweiligen Zustand der Magnetsensoren 1.3, 1.4 ab, wobei bei n = 3

$S1.3_3 = 0$, $S1.4_3 = 1$

gilt. Nunmehr wird wieder zunächst gemäß der Tabelle III überprüft, ob ein Zählimpuls ausgelöst wird, also der Wert für $P_3$ bestimmt.

Da $Z1_2 = 0$, $Z2_2 = 1$ und $F1_2 = 0$, $F2_2 = 0$ sind, folgt gemäß den Bedingungen der Aussagelogik, bzw. aus der Tabelle III:

$P_3 = 0$.

Entsprechend wird kein Zählimpuls ausgelöst und die Frage der Drehrichtung ist somit hier gegenstandslos. Der Zählerstand im FeRAM-Speicherelement 1.6 bleibt daher unverändert.

Danach werden gemäß der Tabelle I

$F1_3 = 0$, $F2_3 = 1$

gesetzt.

Mit Hilfe der Tabelle II werden schließlich

$Z1_3 = 0$, $Z2_3 = 1$

bestimmt. Das FeRAM-Speicherelement 1.6 speichert also die Werte für $F1_n$, $F2_n$, $Z1_n$, $Z2_n$ und den aktuellen Zählerstand.

Im vorgestellten Ausführungsbeispiel wurde eine stetige gleichförmige Bewegung betrachtet. Damit bei Inbetriebnahme des Drehgebers schon geeignete Werte für die Zählmagnetenflankenzustände $Z1_{n-1}$, $Z2_{n-1}$ und für die Hilfsmagnetenflankenzustände $F1_{n-1}$, $F2_{n-1}$ zur Verfügung stehen, werden entsprechende Default-Werte als Startwerte im FeRAM-Speicherelement 1.6 hinterlegt.

Durch das erfindungsgemäße Verfahren zum Betrieb des Drehgebers kann eine eindeutige Zählung von Umdrehungen vorgenommen werden, auch wenn die Drehrichtung wechselt oder in die Hohlwelle 2.7 oszillierende Bewegungen eingeleitet werden.

Durch die entsprechende Ausgestaltung des Drehgebers, sowie die Verwendung der speziellen Auswertelogik ist es nunmehr möglich einen Drehgeber zuschaffen, der energieautark im Notbetrieb arbeiten kann und nur mit einem Impulsdraht 1.1 ausgerüstet sein kann. Dies ist ein großer Vorteil, da derartige Impulsdrähte 1.1 vergleichsweise teuer sind, so dass durch die Erfindung eine kostengünstige Bauweise erreichbar ist.

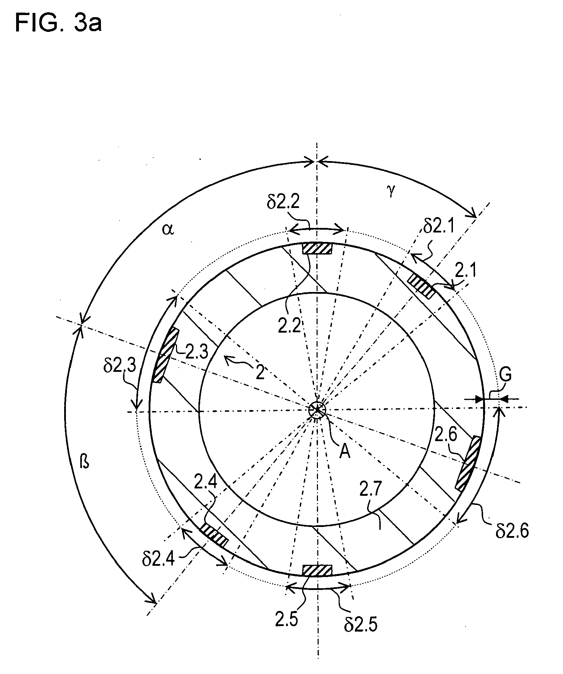

In den Figuren 3a bis 3c ist ein zweites Ausführungsbeispiel dargestellt, das sich vom ersten Beispiel im Wesentlichen dadurch unterscheidet, dass die relative Anordnung der Passivmagnete 2.1, 2.4, der Zählmagnete 2.2, 2.5, der Hilfsmagneten 2.3, 2.6 und des Impulsdrahtes 1.1 zueinander unterschiedlich ist. Auf diese Weise wird die Robustheit des Gerätes gegenüber Maßtoleranzen, z.B. Fertigungstoleranzen, erhöht. Die folgenden Winkelangaben sind jeweils auf eine Nachkommastelle gerundet. Gemäß der Figur 3a sind die Passivmagnete 2.1, 2.4 gegenüber dem jeweilig benachbarten Zählmagneten 2.2, 2.5 um einen Winkel $\gamma$ von 47,4° in Umfangsrichtung versetzt angeordnet. Bei der Festlegung des Winkel $\gamma$ wird jeweils von der Mittellinie des jeweiligen Magneten ausgegangen. Die Zählmagnete 2.2, 2.5 sind gegenüber dem jeweilig benachbarten Hilfsmagneten 2.3, 2.6 um einen Winkel $\alpha$ von 66,3° in Umfangsrichtung versetzt angeordnet. Des Weiteren sind auch die Hilfsmagnete 2.3, 2.6 gegenüber dem jeweilig benachbarten Passivmagneten 2.1, 2.4 um einen Winkel $\beta$ von 66,3° versetzt angeordnet.

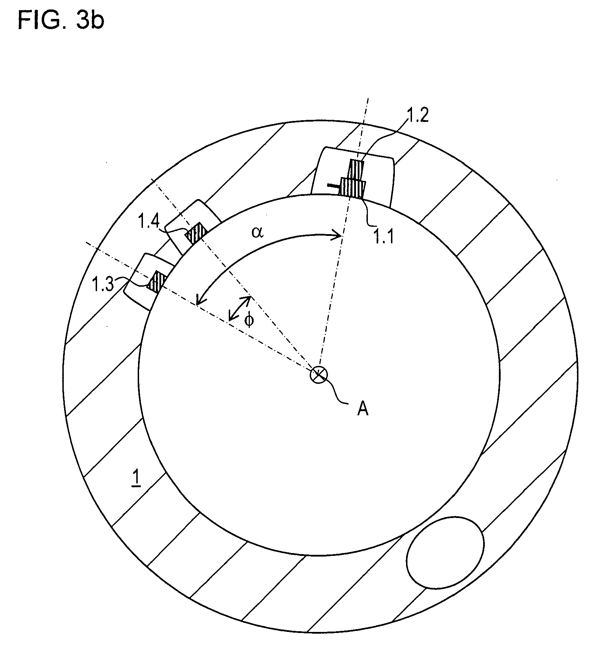

Gemäß der Figur 3b sind der Impulsdraht 1.1 gegenüber einem der MR-Elemente 1.3 um einen Winkel von $\alpha$ von 66,3° in Umfangsrichtung versetzt angeordnet. Zwischen dem betreffenden MR-Element 1.3 und dem Impulsdraht 1.1 liegt das zweite MR-Element 1.4, das gegenüber dem anderen MR-Element 1.3 um einen Winkel $\phi$ gleich 18,9° versetzt angeordnet ist.

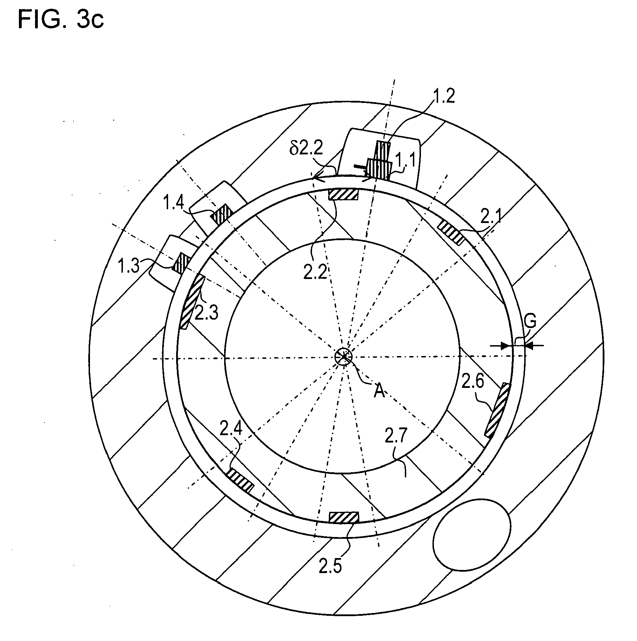

Gemäß den Figuren 3a und 3c weisen die Passivmagnete 2.1, 2.4, die Zählmagnete 2.2, 2.5 und die Hilfsmagnete 2.3, 2.6 Wirkbreiten $\delta2.1$, $\delta2.4$, $\delta2.2$, $\delta2.5$, $\delta2.3$, $\delta2.6$ auf. Die Wirkbreiten $\delta2.1$, $\delta2.4$, $\delta2.2$, $\delta2.5$ betragen im vorgestellten Ausführungsbeispiel 18,9° während die Wirkbreiten $\delta2.3$, $\delta2.6$ der Hilfsmagnete 2.3, 2.6 37,9° betragen. Im zusammengebauten Zustand befindet sich zwischen dem Rotor 2 und dem Stator 1 ein Luftspalt der Größe G.

Sobald durch Drehung des Rotors 2 die Mittellinie der MR-Elemente 1.3, 1.4 mit einer der Wirkbreiten $\delta2.1$, $\delta2.4$, $\delta2.2$, $\delta2.5$, $\delta2.3$, $\delta2.6$ radial fluchtet, spricht das betreffende MR-Element 1.3, 1.4 an.

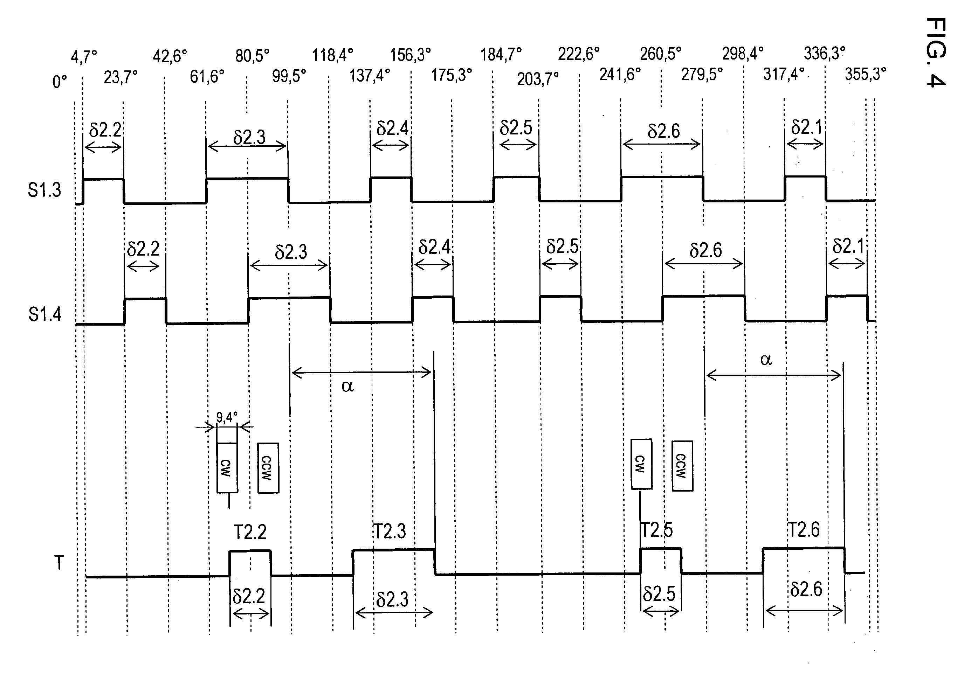

Bezüglich des Impulsdrahtes 1.1 sowie der Zählmagnete 2.2, 2.5 und Hilfsmagnete 2.3, 2.6 können Triggerbereiche T2.2, T2.5, T2.3, T2.6 definiert werden (Figur 4), innerhalb welcher ein Spannungsimpuls vom Impulsdraht 1.1 ausgelöst werden kann. Insbesondere werden je nach Drehrichtung an den Rändern der Triggerbereiche T2.2, T2.5, T2.3, T2.6 Spannungsimpulse ausgelöst. Im vorgestellten Ausführungsbeispiel ist der Drehgeber so ausgestaltet, dass die Triggerbereiche T2.2, T2.5, T2.3, T2.6 genauso groß sind wie die entsprechenden Wirkbreiten $\delta2.2$, $\delta2.5$, $\delta2.3$, $\delta2.6$.

In der Figur 3c ist ein Schnitt durch einen Drehgeber gezeigt, dessen Rotor 2 sich im Uhrzeigersinn bewegt, so dass das Magnetfeld des Zählmagneten 2.2 gerade einen Spannungspuls im Impulsdraht 1.1 auslöst. In dieser Momentanaufnahme weist das MR-Element 1.3 gerade den Zustand eins auf, weil sich dieser innerhalb der Wirkbreite $\delta2.3$ befindet. Dagegen befindet sich das MR-Element 1.4 im Zustand null. In der Figur 4 ist die Drehstellung des Rotors 2 in Abhängigkeit der Zustände der MR-Elemente 1.3, 1.4 und des Triggerzustands T, basierend auf dem Spannungsimpuls, gezeigt. Somit kann die Drehstellung gemäß der Figur 3c der Winkelwert 71,1° in der Figur 4 zugeordnet werden.

Durch die spezielle Anordnung der Passivmagnete 2.1, 2.4, der Zählmagnete 2.2, 2.5 und der Hilfsmagnete 2.3, 2.6 sowie der der MR-Elemente 1.3, 1.4 und des Impulsdrahts 1.1 liegt die Flanke des Spannungsimpulses mit einem Abstand von jeweils $\pm$ 4,7° genau zwischen den Flanken der Signale S1.3 und S1.4. Somit ist eine überaus hohe Sicherheit bezüglich der Drehrichtungserkennung gegeben, denn der Drehgeber toleriert entsprechend Abweichungen von bis zu $\pm$ 4,7° Die gleiche Betrachtung gilt auch für die übrigen Bereiche an denen eine Drehwinkelerkennung durchgeführt wird.

In den Ausführungsbeispielen wurden Drehgeber zur einfachen Erlläuterung der Erfindung mit jeweils zwei Passiv-, Zähl- und Hilfsmagneten 2.1, 2.4; 2.2, 2.5; 2.3, 2.6 vorgestellt. Die Erfindung umfasst aber auch Drehgeber mit mehr als jeweils zwei Passiv-, Zähl- und Hilfsmagneten 2.1, 2.4; 2.2, 2.5; 2.3, 2.6. Insbesondere hat es sich als vorteilhaft erwiesen, wenn jeweils vier Passiv-, Zähl- und Hilfsmagnete 2.1, 2.4; 2.2, 2.5; 2.3, 2.6 angeordnet werden.

Tabelle I

| Zur Bestimmung des Hilfsmagnetenflankenzustands | | | | | | |
|---|---|---|---|---|---|---|
| P | $S1.3_n$ | $S1.4_n$ | $F1_{n-1}$ | $F2_{n-1}$ | $F1_n$ | $F2_n$ |
| 0 | 0 | 0 | 0 | 0 | 1 | 0 |
| 0 | 0 | 0 | 0 | 1 | 0 | 1 |
| 0 | 0 | 0 | 1 | 0 | 1 | 0 |
| 0 | 0 | 0 | 1 | 1 | 1 | 0 |
| 0 | 0 | 1 | 0 | 0 | 0 | 1 |
| 0 | 0 | 1 | 0 | 1 | 0 | 1 |
| 0 | 0 | 1 | 1 | 0 | 1 | 0 |
| 0 | 0 | 1 | 1 | 1 | 0 | 1 |
| 0 | 1 | 0 | 0 | 0 | 0 | 0 |
| 0 | 1 | 0 | 0 | 1 | 0 | 1 |
| 0 | 1 | 0 | 1 | 0 | 1 | 0 |
| 0 | 1 | 0 | 1 | 1 | 0 | 0 |
| 0 | 1 | 1 | 0 | 0 | 0 | 0 |
| 0 | 1 | 1 | 0 | 1 | 0 | 1 |
| 0 | 1 | 1 | 1 | 0 | 1 | 0 |
| 0 | 1 | 1 | 1 | 1 | 0 | 0 |
| 1 | 0 | 0 | 0 | 0 | 1 | 0 |
| 1 | 0 | 0 | 0 | 1 | 0 | 0 |
| 1 | 0 | 0 | 1 | 0 | 0 | 0 |
| 1 | 0 | 0 | 1 | 1 | 0 | 0 |
| 1 | 0 | 1 | 0 | 0 | 0 | 1 |
| 1 | 0 | 1 | 0 | 1 | 0 | 0 |
| 1 | 0 | 1 | 1 | 0 | 0 | 0 |
| 1 | 0 | 1 | 1 | 1 | 0 | 0 |
| 1 | 1 | 0 | 0 | 0 | 0 | 0 |
| 1 | 1 | 0 | 0 | 1 | 0 | 0 |
| 1 | 1 | 0 | 1 | 0 | 0 | 0 |
| 1 | 1 | 0 | 1 | 1 | 0 | 0 |
| 1 | 1 | 1 | 0 | 0 | 0 | 0 |
| 1 | 1 | 1 | 0 | 1 | 0 | 0 |
| 1 | 1 | 1 | 1 | 0 | 0 | 0 |
| 1 | 1 | 1 | 1 | 1 | 0 | 0 |

P Zählimpuls

n Anzahl der vom Impulsdraht ausgelösten Spannungsimpulse

S1.3 Zustand des Magnetsensors 1.3 beim n-ten Spannungsimpuls

S1.4 Zustand des Magnetsensors 1.4 beim n-ten Spannungsimpuls

$F1_{n-1}$ erster Wert des Hilfsmagnetenflankenzustands beim (n-1)-ten Spannungsimpuls

F2$_{n-1}$  zweiter Wert des Hilfsmagnetenflankenzustands beim (n-1)-ten Spannungsimpuls

F1$_n$  erster Wert des Hilfsmagnetenflankenzustands beim n-ten Spannungsimpuls

F2$_n$  zweiter Wert des Hilfsmagnetenflankenzustands beim n-ten Spannungsimpuls

Tabelle II

| Zur Bestimmung des Zählmagnetenflankenzustands | | | | | |
|---|---|---|---|---|---|
| S1.3$_n$ | S1.4$_n$ | Z1$_{n-1}$ | Z2$_{n-1}$ | Z1$_n$ | Z2$_n$ |
| 0 | 0 | 0 | 0 | 0 | 0 |
| 0 | 0 | 0 | 1 | 0 | 1 |
| 0 | 0 | 1 | 0 | 1 | 0 |
| 0 | 0 | 1 | 1 | 0 | 0 |
| 0 | 1 | 0 | 0 | 0 | 0 |
| 0 | 1 | 0 | 1 | 0 | 1 |
| 0 | 1 | 1 | 0 | 1 | 0 |
| 0 | 1 | 1 | 1 | 0 | 0 |
| 1 | 0 | 0 | 0 | 1 | 0 |
| 1 | 0 | 0 | 1 | 1 | 0 |
| 1 | 0 | 1 | 0 | 1 | 0 |
| 1 | 0 | 1 | 1 | 1 | 0 |
| 1 | 1 | 0 | 0 | 0 | 1 |
| 1 | 1 | 0 | 1 | 0 | 1 |
| 1 | 1 | 1 | 0 | 0 | 1 |
| 1 | 1 | 1 | 1 | 0 | 1 |

n  Anzahl der vom Impulsdraht ausgelösten Spannungsimpulse

S1.3  Zustand des Magnetsensors 1.3 beim n-ten Spannungsimpuls

S1.4  Zustand des Magnetsensors 1.4 beim n-ten Spannungsimpuls

Z1$_{n-1}$  erster Wert des Zählmagnetenflankenzustands beim (n-1)-ten Spannungsimpuls

Z2$_{n-1}$  zweiter Wert des Zählmagnetenflankenzustands beim (n-1)-ten Spannungsimpuls

Z1$_n$  erster Wert des Zählmagnetenflankenzustands beim n-ten Spannungsimpuls

Z2$_n$  zweiter Wert des Zählmagnetenflankenzustands beim n-ten Spannungsimpuls

Tabelle III

| S1.3$_n$ | S1.4$_n$ | Z1$_{n-1}$ | Z2$_{n-1}$ | F1$_{n-1}$ | F2$_{n-1}$ | R | P |
|---|---|---|---|---|---|---|---|
| 0 | 0 | 0 | 0 | 0 | 0 | / | / |
| 0 | 0 | 0 | 0 | 0 | 1 | / | / |
| 0 | 0 | 0 | 0 | 1 | 0 | / | / |
| 0 | 0 | 0 | 0 | 1 | 1 | / | / |
| 0 | 0 | 0 | 1 | 0 | 0 | cw | 1 |
| 0 | 0 | 0 | 1 | 0 | 1 | / | 0 |
| 0 | 0 | 0 | 1 | 1 | 0 | / | 0 |
| 0 | 0 | 0 | 1 | 1 | 1 | / | / |
| 0 | 0 | 1 | 0 | 0 | 0 | / | 0 |
| 0 | 0 | 1 | 0 | 0 | 1 | / | 0 |
| 0 | 0 | 1 | 0 | 1 | 0 | / | 0 |
| 0 | 0 | 1 | 0 | 1 | 1 | / | / |
| 0 | 0 | 1 | 1 | 0 | 0 | / | / |
| 0 | 0 | 1 | 1 | 0 | 1 | / | / |
| 0 | 0 | 1 | 1 | 1 | 0 | / | / |
| 0 | 0 | 1 | 1 | 1 | 1 | / | / |
| 0 | 1 | 0 | 0 | 0 | 0 | / | / |
| 0 | 1 | 0 | 0 | 0 | 1 | / | / |
| 0 | 1 | 0 | 0 | 1 | 0 | / | / |
| 0 | 1 | 0 | 0 | 1 | 1 | / | / |
| 0 | 1 | 0 | 1 | 0 | 0 | / | 0 |
| 0 | 1 | 0 | 1 | 0 | 1 | / | 0 |
| 0 | 1 | 0 | 1 | 1 | 0 | / | 0 |
| 0 | 1 | 0 | 1 | 1 | 1 | / | / |
| 0 | 1 | 1 | 0 | 0 | 0 | ccw | 1 |
| 0 | 1 | 1 | 0 | 0 | 1 | / | 0 |
| 0 | 1 | 1 | 0 | 1 | 0 | / | 0 |
| 0 | 1 | 1 | 0 | 1 | 1 | / | / |
| 0 | 1 | 1 | 1 | 0 | 0 | / | / |
| 0 | 1 | 1 | 1 | 0 | 1 | / | / |
| 0 | 1 | 1 | 1 | 1 | 0 | /. | / |
| 0 | 1 | 1 | 1 | 1 | 1 | / | / |
| 1 | 0 | 0 | 0 | 0 | 0 | / | / |
| 1 | 0 | 0 | 0 | 0 | 1 | / | / |
| 1 | 0 | 0 | 0 | 1 | 0 | / | / |
| 1 | 0 | 0 | 0 | 1 | 1 | / | / |
| 1 | 0 | 0 | 1 | 0 | 0 | cw | 1 |
| 1 | 0 | 0 | 1 | 0 | 1 | cw | 1 |
| 1 | 0 | 0 | 1 | 1 | 0 | cw | 1 |
| 1 | 0 | 0 | 1 | 1 | 1 | / | / |
| 1 | 0 | 1 | 0 | 0 | 0 | / | 0 |
| 1 | 0 | 1 | 0 | 0 | 1 | cw | 1 |
| 1 | 0 | 1 | 0 | 1 | 0 | cw | 1 |
| 1 | 0 | 1 | 0 | 1 | 1 | / | / |
| 1 | 0 | 1 | 1 | 0 | 0 | / | / |

| S1.3$_n$ | S1.4$_n$ | Z1$_{n-1}$ | Z2$_{n-1}$ | F1$_{n-1}$ | F2$_{n-1}$ | R | P |
|---|---|---|---|---|---|---|---|
| 1 | 0 | 1 | 1 | 0 | 1 | / | / |
| 1 | 0 | 1 | 1 | 1 | 0 | / | / |
| 1 | 0 | 1 | 1 | 1 | 1 | / | / |
| 1 | 1 | 0 | 0 | 0 | 0 | / | / |
| 1 | 1 | 0 | 0 | 0 | 1 | / | / |
| 1 | 1 | 0 | 0 | 1 | 0 | / | / |
| 1 | 1 | 0 | 0 | 1 | 1 | / | / |
| 1 | 1 | 0 | 1 | 0 | 0 | / | 0 |
| 1 | 1 | 0 | 1 | 0 | 1 | ccw | 1 |
| 1 | 1 | 0 | 1 | 1 | 0 | ccw | 1 |
| 1 | 1 | 0 | 1 | 1 | 1 | / | / |
| 1 | 1 | 1 | 0 | 0 | 0 | ccw | 1 |
| 1 | 1 | 1 | 0 | 0 | 1 | ccw | 1 |
| 1 | 1 | 1 | 0 | 1 | 0 | ccw | 1 |
| 1 | 1 | 1 | 0 | 1 | 1 | / | / |
| 1 | 1 | 1 | 1 | 0 | 0 | / | / |
| 1 | 1 | 1 | 1 | 0 | 1 | / | / |
| 1 | 1 | 1 | 1 | 1 | 0 | / | / |
| 1 | 1 | 1 | 1 | 1 | 1 | / | / |

n    Anzahl der vom Impulsdraht ausgelösten Spannungsimpulse

S1.3    Zustand des Magnetsensors 1.3 beim n-ten Spannungsimpuls

S1.4    Zustand des Magnetsensors 1.4 beim n-ten Spannungsimpuls

F1$_{n-1}$    erster Wert des Hilfsmagnetenflankenzustands beim (n-1)-ten Spannungsimpuls

F2$_{n-1}$    zweiter Wert des Hilfsmagnetenflankenzustands beim (n-1)-ten Spannungsimpuls

Z1$_{n-1}$    erster Wert des Zählmagnetenflankenzustands beim (n-1)-ten Spannungsimpuls

Z2$_{n-1}$    zweiter Wert des Zählmagnetenflankenzustands beim (n-1)-ten Spannungsimpuls

R    Drehrichtung (cw clockwise; ccw counter- clockwise)

P    Zählimpuls

## Patentansprüche

1.    Drehgeber umfassend eine erste Bauteilgruppe (1) und eine zweite Bauteilgruppe (2), wobei die Bauteilgruppen (1, 2) relativ um eine Achse (A) zueinander drehbar angeordnet sind und

    - die erste Bauteilgruppe (1)

        · einen Auslösesensor (1.1)

- die zweite Bauteilgruppe (2)

  · einen ersten Magneten (2.1, 2.4)
  · einen zweiten Magneten (2.2, 2.5) und
  · einen dritten Magneten (2.3, 2.6) umfasst,

**dadurch gekennzeichnet, dass**
die erste Bauteilgruppen (1) mehrere omnipolar sensitive Magnetsensoren (1.3, 1.4) umfasst, die bezüglich der Achse (A) in Umfangsrichtung versetzt angeordnet sind,
der Auslösesensor (1.1) einen Impulsdraht und einen Rücksetzmagneten (1.2) umfasst und der Rücksetzmagnet (1.2) so orientiert ist, dass dieser eine Richtungskomponente parallel zur Längserstreckung des Impulsdrahts aufweist, wobei
die Bauteilgruppen (1, 2) zudem so konfiguriert sind, dass bei einer relativen Drehung der beiden Bauteile (1, 2) um mindestens eine volle Umdrehung
von den Magnetsensoren (1.3, 1.4) das Magnetfeld des ersten Magneten (2.1, 2.4) und des dritten Magneten (2.3, 2.6) detektierbar ist, wobei
durch den zweiten Magneten (2.2, 2.5) und den dritten Magneten (2.3, 2.6) ein Triggersignal in Form eines Spannungsimpulses vom Impulsdraht erzeugbar ist, während eine Erzeugung des Triggersignals vom Impulsdraht durch den ersten Magneten (2.1, 2.4) unterbleibt.

2. Drehgeber gemäß dem Anspruch 1, wobei der Impulsdraht mit einer Richtungskomponente parallel zur Achse (A) angeordnet ist.

3. Drehgeber gemäß einem der Ansprüche 1 oder 2, wobei der Rücksetzmagnet (1.2) und der erste Magnet (2.1, 2.4) so orientiert sind, dass deren Polausrichtungen parallel sind.

4. Drehgeber gemäß einem der vorhergehenden Ansprüche, wobei die Magnetsensoren (1.3, 1.4) als MR- oder Hall-Elemente ausgestaltet sind.

5. Drehgeber gemäß einem der vorhergehenden Ansprüche, wobei die Polausrichtungen des zweiten Magneten (2.2, 2.5) und des dritten Magneten (2.3, 2.6) mit einer Richtungskomponente parallel zur Achse (A) orientiert sind, während die des ersten Magneten (2.1, 2.4) mit einer Richtungskomponente antiparallel zur Achse (A) orientiert ist.

6. Drehgeber gemäß einem der vorhergehenden Ansprüche, wobei die zweite Bauteilgruppe (2) eine Hohlwelle (2.7) aufweist.

7. Drehgeber gemäß einem der vorhergehenden Ansprüche, wobei der Drehgeber eine elektronische Schaltung (1.5) und ein nicht-flüchtiges Speicherelement (1.6) umfasst und

   - vier Flankenzustände (F1, F2, Z1, Z2) und
   - ein Zählerstand

   im Speicherelement (1.6) speicherbar sind und bei einem späteren Auftreten eines Triggersignals die Flankenzustände (F1, F2, Z1, Z2) aus dem Speicherelement (1.6) auslesbar sind, so dass mit Hilfe der elektronischen Schaltung (1.5)

   die relative Drehrichtung (cw, ccw) der Bauteilgruppen (1, 2) zueinander bestimmbar ist, sowie
   ein Zählimpuls (P) durch die elektronische Schaltung (1.5) erzeugbar ist, wobei

   basierend auf der Drehrichtung (cw, ccw) und dem Auftreten des Zählimpulses (P) eine Änderung des Zählerstands im Speicherelement (1.6) speicherbar ist.

8. Drehgeber gemäß dem Anspruch 7, wobei die elektronische Schaltung (1.5) als integrierter Schaltkreis, insbesondere als ein ASIC-Baustein ausgestaltet ist.

9. Drehgeber gemäß einem der vorhergehenden Ansprüche, wobei der dritte Magnet (2.3, 2.6) eine größere Wirkbreite ($\delta 2.3$, $\delta 2.6$) aufweist als eine jeweilige Wirkbreite ($\delta 2.1$ $\delta 2.4$; $\delta 2.2$, $\delta 2.5$) des ersten Magneten (2.1, 2.4) oder des zweiten Magneten (2.2, 2.5).

10. Drehgeber gemäß einem der vorhergehenden Ansprüche, wobei Triggerbereiche (T2.2, T2.3, T2,5, T2.6) derart ausgestaltet sind, dass deren Ränder gegenüber den Flanken der Zustände (S1.3, S1.4) der Magnetsensoren (1.3, 1.4) versetzt angeordnet sind.

11. Drehgeber gemäß einem der vorhergehenden Ansprüche, wobei die Wirkbreite ($\delta 2.2$, $\delta 2.5$) des zweiten Magneten (2.2, 2.5) so groß ist wie dessen Triggerbereich (T2.2, T2.5) und / oder der die Wirkbreite ($\delta 2.3$, $\delta 2.6$) des dritten Magneten (2.3, 2.6) so groß ist wie dessen Triggerbereich (T2.3, T2.6).

12. Drehgeber gemäß einem der vorhergehenden Ansprüche, wobei der erste Magnet (2.1, 2.4) gegenüber dem zweiten Magneten (2.2, 2.5) um einen Winkel ($\gamma$) und der zweite Magnet (2.2, 2.5) gegenüber dem dritten Magneten (2.3, 2.6) um einen Winkel ($\alpha$) in Umfangsrichtung versetzt angeordnet sind und die beiden Winkel ($\alpha$, $\gamma$) unterschiedlich groß sind.

13. Drehgeber gemäß dem Anspruch 12, wobei bei einer relativen Drehung der beiden Bauteile (1, 2) um eine volle Umdrehung, ohne Überlappung der Anfangs- und Endpunkte, j Zählimpulse (P) erzeugbar sind, und

- der Winkel ($\gamma$) 95°/j $\pm$ 20°/j oder 360°/j - 95°/j $\pm$ 20°/j und
- der Winkel ($\alpha$) 133°/j $\pm$ 20°/j oder 360°/j - 133°/j $\pm$ 20°/j beträgt.

14. Drehgeber gemäß einem der vorhergehenden Ansprüche, wobei der Auslösesensor (1.1) gegenüber einem der Magnetsensoren (1.3) um einen Winkel ($\alpha$) von 133°/j $\pm$ 20°/j oder von 360°/j - 133°/j $\pm$ 20°/j in Umfangsrichtung versetzt angeordnet ist.

15. Drehgeber gemäß einem der vorhergehenden Ansprüche, wobei die Magnetsensoren (1.3, 1.4) um einen Winkel ($\phi$) von (38°$\pm$ 10°)/j oder von 360°/j - (38°$\pm$ 10°)/j in Umfangsrichtung versetzt angeordnet sind.

16. Verfahren zum Betrieb eines Drehgebers, der eine erste Bauteilgruppe (1) und eine zweite Bauteilgruppe (2) umfasst, wobei die Bauteilgruppen (1, 2) relativ um eine Achse (A) zueinander drehbar angeordnet sind, und

- die erste Bauteilgruppe (1)

· einen Auslösesensor (1.1) sowie
· mehrere mehrere omnipolar sensitive Magnetsensoren (1.3, 1.4), die bezüglich der Achse (A) in Umfangsrichtung versetzt angeordnet sind,

- die zweite Bauteilgruppe (2)

einen ersten Magneten (2.1, 2.4)
· einen zweiten Magneten (2.2, 2.5) und
· einen dritten Magneten (2.3, 2.6) umfasst, wobei

der Auslösesensor (1.1) einen Impulsdraht und einen Rücksetzmagneten (1.2) umfasst und der Rücksetzmagnet (1.2) so orientiert ist, dass dieser eine Richtungskomponente parallel zur Längserstreckung des Impulsdrahts aufweist,
wobei bei einer relativen Drehung der beiden Bauteile (1, 2) um mindestens eine volle Umdrehung
von den Magnetsensoren (1.3, 1.4) das Magnetfeld des ersten Magneten (2.1, 2.4) und des dritten Magneten (2.3, 2.6) detektiert wird, wobei
durch den zweiten Magneten (2.2, 2.5) und den dritten Magneten (2.3, 2.6) ein Triggersignal in Form eines Spannungsimpulses vom Impulsdraht erzeugt wird, während eine Erzeugung des Triggersignals vom Impulsdraht durch den ersten Magneten (2.1, 2.4) unterbleibt.

17. Verfahren zum Betrieb eines Drehgebers gemäß dem Anspruch 16, wobei

- in einem nicht-flüchtigen Speicherelement (1.6)

· vier Flankenzustände (F1, F2, Z1, Z2) und
· ein Zählerstand gespeichert werden und

- bei einem späteren Auftreten eines Triggersignals die Flankenzustände (F1, F2, Z1, Z2) aus dem Speicherelement (1.6) ausgelesen werden und
- basierend darauf die relative Drehrichtung (cw, ccw) der Bauteilgruppen (1, 2) zueinander mit Hilfe einer elektronischen Schaltung (1.5) bestimmt wird und
- in der Schaltung (1.5) ein Zählimpuls (P) erzeugt wird, so dass
- basierend auf der Drehrichtung (cw, ccw) und dem Zählimpuls (P) eine Änderung des Zählerstands im Speicherelement (1.6) gespeichert wird.

18. Verfahren zum Betrieb eines Drehgebers gemäß dem Anspruch 16 oder 17, wobei bei einer relativen Drehung der beiden Bauteile (1, 2) um eine Umdrehung, ohne Überlappung der Anfangs- und Endpunkte, zwei oder vier Zählimpulse (P) erzeugt werden.

19. Verfahren zum Betrieb eines Drehgebers gemäß einem der Ansprüche 16 bis 18, wobei der Auslösesensor (1.1) einen Impulsdraht und einen Rücksetzmagneten (1.2) umfasst und der Rücksetzmagnet (1.2) so orientiert ist, dass dieser eine Richtungskomponente parallel zur Längserstreckung des Impulsdrahts aufweist, und durch den zweiten Magneten (2.2, 2,5) und den dritten Magneten (2.3, 2.6) ein Spannungsimpuls vom Impulsdrahts erzeugt wird, während ein Auslösen eines Spannungsimpulses vom Impulsdraht durch den ersten Magneten (2.1, 2.4) unterbleibt.

20. Verfahren zum Betrieb eines Drehgebers gemäß dem Anspruch 19, wobei der Energieinhalt des Spannungsimpulses für das Erzeugen eines Zählimpulses (P) und das Abspeichern eines Zählerstandes in einen nicht-flüchtigen Speicherelement (1.6) genutzt wird.

**Claims**

1. Rotary encoder comprising a first component group (1) and a second component group (2), the component groups (1, 2) being arranged such that they can be rotated relative to each other about an axis (A) and

- the first component group (1) comprising

. a trigger sensor (1.1)

- the second component group (2) comprising

. a first magnet (2.1, 2.4)
. a second magnet (2.2, 2.5) and
. a third magnet (2.3, 2.6),

**characterized in that**

the first component group (1) comprises a plurality of omnipolar sensitive magnetic sensors (1.3, 1.4) which are arranged offset in the circumferential direction with respect to the axis (A),
the trigger sensor (1.1) comprises an impulse wire and a reset magnet (1.2), and the reset magnet (1.2) is oriented such that the latter has a directional component parallel to the longitudinal extent of the impulse wire, wherein the component groups (1, 2) are additionally configured such that, during a relative rotation of the two components (1, 2) by at least one full revolution
the magnetic field of the first magnet (2.1, 2.4) and of the third magnet (2.3, 2.6) can be detected by the magnetic sensors (1.3, 1.4), wherein
a trigger signal in the form of a voltage pulse from the impulse wire can be generated by the second magnet (2.2, 2.5) and the third magnet (2.3, 2.6), while a generation of the trigger signal from the impulse wire by the first magnet (2.1, 2.4) is stopped.

2. Rotary encoder according to Claim 1, wherein the impulse wire is arranged with a directional component parallel to the axis (A).

3. Rotary encoder according to either of Claims 1 and 2, wherein the reset magnet (1.2) and the first magnet (2.1, 2.4) are oriented such that their polar orientations are parallel.

4. Rotary encoder according to one of the preceding claims, wherein the magnetic sensors (1.3, 1.4) are configured as MR or Hall elements.

5. Rotary encoder according to one of the preceding claims, wherein the polar orientations of the second magnet (2.2, 2.5) and of the third magnet (2.3, 2.6) are oriented with a directional component parallel to the axis (A), while that of the first magnet (2.1, 2.4) is oriented with a directional component anti-parallel to the axis (A).

6. Rotary encoder according to one of the preceding claims, wherein the second component group (2) has a hollow shaft (2.7).

7. Rotary encoder according to one of the preceding claims, wherein the rotary encoder comprises an electronic circuit (1.5) and a non-volatile memory element (1.6) and

   - four flank states (F1, F2, Z1, Z2) and
   - one counter reading

can be stored in the memory element (1.6) and, upon a later occurrence of a trigger signal, the flank states (F1, F2, Z1, Z2) can be read from the memory element (1.6), so that, with the aid of the electronic circuit (1.5)

   · the relative direction of rotation (cw, ccw) of the component groups (1, 2) in relation to each other can be determined, and
   . a counting pulse (P) can be generated by the electronic circuit (1.5), wherein

on the basis of the direction of rotation (cw, ccw) and the occurrence of the counting pulse (P), a change in the counter reading can be stored in the memory element (1.6).

8. Rotary encoder according to Claim 7, wherein the electronic circuit (1.5) is configured as an integrated circuit, in particular as an ASIC module.

9. Rotary encoder according to one of the preceding claims, wherein the third magnet (2.3, 2.6) has a greater active width ($\delta2.3$, $\delta2.6$) than a respective active width ($\delta2.1$, $\delta2.4$; $\delta2.2$, $\delta2.5$) of the first magnet (2.1, 2.4) or of the second magnet (2.2, 2.5).

10. Rotary encoder according to one of the preceding claims, wherein trigger frames (T2.2, T2.3, T2.5, T2.6) are configured in such a way that their edges are arranged offset with respect to the flanks of the states (S1.3, S1.4) of the magnetic sensors (1.3, 1.4).

11. Rotary encoder according to one of the preceding claims, wherein the active width ($\delta2.2$, $\delta2.5$) of the second magnet (2.2, 2.5) is as large as its trigger frame (T2.2, T2.5) and/or the active width ($\delta2.3$, $\delta2.6$) of the third magnet (2.3, 2.6) is as large as its trigger frame (T2.3, T2.6).

12. Rotary encoder according to one of the preceding claims, wherein the first magnet (2.1, 2.4) is arranged offset with respect to the second magnet (2.2, 2.5) by an angle ($\gamma$), and the second magnet (2.2, 2.5) is arranged offset with respect to the third magnet (2.3, 2.6) by an angle ($\alpha$) in the circumferential direction, and the two angles ($\alpha$, $\gamma$) are of different sizes.

13. Rotary encoder according to Claim 12, wherein, during a relative rotation of the two components (1, 2) by one full revolution, without overlapping the starting and ending points, j counting pulses (P) can be generated, and

   - the angle ($\gamma$) is 95°/j $\pm$ 20°/j or 360°/j - 95°/j $\pm$ 20°/j and
   - the angle ($\alpha$) is 133°/j $\pm$ 20°/j or 360°/j - 133°/j 1 20°/j.

14. Rotary encoder according to one of the preceding claims, wherein the trigger sensor (1.1) is arranged offset with respect to one of the magnetic sensors (1.3) by an angle ($\alpha$) of 133°/j $\pm$ 20°/j or of 360°/j -133°/j $\pm$ 20°/j in the circumferential direction.

15. Rotary encoder according to one of the preceding claims, wherein the magnetic sensors (1.3, 1.4) are arranged offset by an angle ($\varphi$) of (38° $\pm$ 10°)/j or of 360°/j - (38° $\pm$ 10°)/j in the circumferential direction.

**16.** Method of operating a rotary encoder which comprises a first component group (1) and a second component group (2), the component groups (1, 2) being arranged such that they can be rotated relative to each other about an axis (A) and

- the first component group (1) comprising

. a trigger sensor (1.1), and
. a plurality of omnipolar sensitive magnetic sensors (1.3, 1.4) which are arranged offset in the circumferential direction with respect to the axis (A),

- the second component group (2) comprising

. a first magnet (2.1, 2.4)
. a second magnet (2.2, 2.5) and
. a third magnet (2.3, 2.6), wherein

the trigger sensor (1.1) comprises an impulse wire and a reset magnet (1.2), and the reset magnet (1.2) is oriented such that the latter has a directional component parallel to the longitudinal extent of the impulse wire, wherein during a relative rotation of the two components (1, 2) by at least one full revolution, the magnetic field of the first magnet (2.1, 2.4) and of the third magnet (2.3, 2.6) is detected by the magnetic sensors (1.3, 1.4), wherein a trigger signal in the form of a voltage pulse from the impulse wire is generated by the second magnet (2.2, 2.5) and the third magnet (2.3, 2.6), while a generation of the trigger signal from the impulse wire by the first magnet (2.1, 2.4) is stopped.

**17.** Method for operating a rotary encoder according to Claim 16, wherein

-

. four flank states (F1, F2, Z1, Z2) and
. a counter reading are stored in a non-volatile memory element (1.6) and

- upon a later occurrence of a trigger signal, the flank states (F1, F2, Z1, Z2) are read from the memory element (1.6), and
- on that basis, the relative direction of rotation (cw, ccw) of the component groups (1, 2) in relation to each other is determined with the aid of an electronic circuit (1.5), and
- a counting pulse (P) is generated in the circuit (1.5), so that
- on the basis of the direction of rotation (cw, ccw) and the counting pulse (P), a change in the counter reading is stored in the memory element (1.6).

**18.** Method for operating a rotary encoder according to Claim 16 or 17, wherein, during a relative rotation of the two components (1, 2) by one revolution, without overlapping the starting and ending points, two or four counting pulses (P) are generated.

**19.** Method for operating a rotary encoder according to one of Claims 16 to 18, wherein the trigger sensor (1.1) comprises an impulse wire and a reset magnet (1.2), and the reset magnet (1.2) is oriented such that the latter has a directional component parallel to the longitudinal extent of the impulse wire, and a voltage pulse from the impulse wire is generated by the second magnet (2.2, 2.5) and the third magnet (2.3, 2.6), while triggering of a voltage pulse from the impulse wire by the first magnet (2.1, 2.4) is stopped.

**20.** Method for operating a rotary encoder according to Claim 19, wherein the energy content of the voltage pulse is utilised for generating a counting pulse (P) and for storing a counter reading in a non-volatile memory element (1.6).

**Revendications**

**1.** Codeur rotatif comprenant un premier groupe de composants (1) et un deuxième groupe de composants (2), dans lequel les groupes de composants (1, 2) sont disposés de manière à pouvoir tourner l'un par rapport à l'autre autour d'un axe (A) et

- le premier groupe de composants (1) comprend
- un capteur de déclenchement (1.1),
- le deuxième groupe de composants (2) comprend
- un premier aimant (2.1, 2.4),
- un deuxième aimant (2.2, 2.5) et
- un troisième aimant (2.3, 2.6),

**caractérisé en ce que** le premier groupe de composants (1) comprend plusieurs capteurs magnétiques omnipolaires sensibles (1.3, 1.4) qui sont disposées de manière décalée par rapport à l'axe (A) dans la direction circonférentielle, le capteur de déclenchement (1.1) comprend un fil à impulsions et un aimant de réinitialisation (1.2) et l'aimant de réinitialisation (1.2) est orienté de manière à présenter une composante de direction parallèle à l'extension longitudinale du fil à impulsions, dans lequel

les groupes de composants (1, 2) sont en outre configurés de manière à ce que, lors d'une rotation relative des deux composants (1, 2) d'au moins un tour complet,

le champ magnétique du premier aimant (2.1, 2.4) et du troisième aimant (2.3, 2.6) puisse être détecté par les capteurs magnétiques (1.3, 1.4), dans lequel un signal de déclenchement sous la forme d'une impulsion de tension peut être généré par le fil à impulsions au moyen du deuxième aimant (2.2, 2.5) et du troisième aimant (2.3, 2.6) alors qu'une génération du signal de déclenchement par le fil à impulsions n'est pas effectuée par le premier aimant (2.1, 2.4).

2. Codeur rotatif selon la revendication 1, dans lequel le fil à impulsions est disposé de manière à présenter une composante de direction parallèle à l'axe (A).

3. Codeur rotatif selon l'une des revendications 1 ou 2, dans lequel l'aimant de réinitialisation (1.2) et le premier aimant (2.1, 2.4) sont disposés de manière à ce qu'ils soient parallèles à leur alignement polaire.

4. Codeur rotatif selon l'une quelconque des revendications précédentes, dans lequel les capteurs magnétiques (1.3, 1.4) sont réalisés sous la forme d'éléments MR ou Hall.

5. Codeur rotatif selon l'une quelconque des revendications précédentes, dans lequel les alignements polaires des deux aimants (2.2, 2.5) et du troisième aimant (2.3, 2.6) sont orientés de manière à comporter une composante de direction parallèle à l'axe (A) alors que celui du premier aimant (2.1, 2.4) est orienté de manière à présenter une composante de direction antiparallèle à l'axe (A).

6. Codeur rotatif selon l'une quelconque des revendications précédentes, dans lequel le deuxième groupe de composants (2) comporte un arbre creux (2.7).

7. Codeur rotatif selon l'une quelconque des revendications précédentes, dans lequel le codeur rotatif comprend un circuit électronique (1.5) et un élément de mémoire non volatile (1.6) et

- quatre états de fronts (F1, F2, Z1, Z2) et
- un état de comptage peuvent être stockés dans l'élément de mémoire (1.6) et, lors d'une apparition ultérieure d'un signal de déclenchement, les états de fronts (F1, F2, Z1, Z2) peuvent être lus depuis l'élément de mémoire (1.6) de manière à ce que, à l'aide du circuit électronique (1.5),
- les sens de rotation relatifs (cw, ccw) des groupes de composants (1, 2) puissent être déterminés l'un par rapport à l'autre, et
- une impulsion de comptage (P) puisse être générée par le circuit électronique (1.5), dans lequel sur la base du sens de rotation (cw, ccw) et de l'apparition de l'impulsion de comptage (P), une modification de l'état de comptage peut être stockée dans l'élément de mémoire (1.6).

8. Codeur rotatif selon la revendication 7, dans lequel le circuit électronique (1.5) est réalisé sous la forme d'un circuit intégré, notamment sous la forme d'un composant ASIC.

9. Codeur rotatif selon l'une quelconque des revendications précédentes, dans lequel le troisième aimant (2.3, 2.6) présente une plus grande largeur effective ($\delta2.3$, $\delta2.6$) qu'une largeur effective respective ($\delta2.1$, $\delta2.4$ ; $\delta2.2$, $\delta2.5$) du premier aimant (2.1, 2.4) ou du deuxième aimant (2.2, 2.5).

**10.** Codeur rotatif selon l'une quelconque des revendications précédentes, dans lequel la région de déclenchement (T2.2, T2.3, T2.5, T2.6) est sélectionnée de manière à ce que ses bords soient disposés de façon décalée par rapport aux fronts des états (S1.3, S1.4) des capteurs magnétiques (1.3, 1.4).

**11.** Codeur rotatif selon l'une quelconque des revendications précédentes, dans lequel la largeur effective ($\delta$2.2, $\delta$2.5) du deuxième aimant (2.2, 2.5) est de même valeur que sa région de déclenchement (T2.2, T2.5) et/ou la largeur effective ($\delta$2.3, $\delta$2.6) du troisième aimant (2.3, 2.6) est de même valeur que sa région de déclenchement (T2.3, T2.6).

**12.** Codeur rotatif selon l'une quelconque des revendications précédentes, dans lequel le premier aimant (2.1, 2.4) est dispose de manière décalée par rapport au deuxième aimant (2.2, 2.5) d'un angle ($\gamma$) et le deuxième aimant (2.2, 2.5) est disposé de manière décalée par rapport au troisième aimant (2.3, 2.6) d'un angle ($\alpha$) dans la direction circonférentielle et les deux angles ($\alpha$, $\gamma$) ont des valeurs différentes.

**13.** Codeur rotatif selon la revendication 12, dans lequel, lors d'une rotation relative des deux composants (1, 2) d'un tour complet, sans superposition des points de départ et d'arrivée, j impulsions de comptage (P) sont générées, et

- l'angle ($\gamma$) est de 95°/j $\pm$ 20°/j ou de 360°/j - 95°/j $\pm$ 20°/j et
- l'angle ($\alpha$) est de 133°/j $\pm$ 20°/j ou de 360°/j - 133°/j $\pm$ 20°/j.

**14.** Codeur rotatif selon l'une quelconque des revendications précédentes, dans lequel le capteur de déclenchement (1.1) est disposé de manière décalée dans la direction circonférentielle par rapport à l'un des capteurs magnétiques (1.3) d'un angle ($\alpha$) de 133°/j $\pm$ 20°/j ou de 360°/j - 1.33°/j $\pm$ 20°/j.

**15.** Codeur rotatif selon l'une quelconque des revendications précédentes, dans lequel les capteurs magnétiques (1.3, 1.4) sont disposés de manière décalée dans la direction circonférentielle d'un angle ($\phi$) de (38° $\pm$ 10°)/j ou de 360°/j - (38° $\pm$ 10°)/j.

**16.** Procédé de mise en fonctionnement d'un codeur rotatif qui comprend un premier groupe de composants (1) et un deuxième groupe de composants (2), dans lequel les groupes de composants (1, 2) sont disposés de manière à pouvoir tourner l'un par rapport à l'autre autour d'un axe (A), et
le premier groupe de composants (1) comprend

- un capteur de déclenchement (1.1) et
- plusieurs capteurs magnétiques omnipolaires sensibles (1.3, 1.4) qui sont disposés de manière décalée par rapport à l'axe (A) dans la direction circonférentielle,
- le deuxième groupe de composants (2) comprend
- un premier aimant (2.1, 2.4)
- un deuxième aimant (2.2, 2.5) et
- un troisième aimant (2.3, 2.6), dans lequel le capteur de déclenchement (1.1) comprend un fil à impulsions et un aimant de réinitialisation (1.2) et l'élément de réinitialisation (1.2) est orienté de manière à présenter une composante de direction parallèle à l'extension longitudinale du fil à impulsions,

dans lequel, lors d'une rotation relative des deux composants (1, 2) d'au moins un tour complet,
le champ magnétique du premier aimant (2.1, 2.4) et du troisième aimant (2.3, 2.6) est détecté par les capteurs magnétiques (1.3, 1.4), dans lequel un signal de déclenchement sous la forme d'une impulsion de tension est généré par le fil à impulsions au moyen du deuxième aimant (2.2, 2.5) et du troisième aimant (2.3, 2.6) alors qu'une génération du signal de déclenchement par le fil à impulsions n'est pas effectuée par le premier aimant (2.1, 2.4).

**17.** Procédé de mise en fonctionnement d'un codeur rotatif selon la revendication 16, dans lequel

- quatre états de fronts (F1, F2, Z1, Z2) et
- un état de comptage sont stockés dans un élément de mémoire non volatile (1.6), et
- lors d'une apparition ultérieure d'un signal de déclenchement, les états de fronts (F1, F2, Z1, Z2) sont lus depuis l'élément de mémoire (1.6) et
- sur la base de ceux-ci, le sens de rotation (cw, ccw) des groupes de composants (1, 2) l'un par rapport à l'autre est déterminé à l'aide d'un circuit électronique (1.5) et
- une impulsion de comptage (P) est générée dans le circuit (1.5) de manière à ce que
- sur la base du sens de rotation (cw, ccw) et de l'impulsion de comptage (P), une modification de l'état de comptage soit stockée dans l'élément de mémoire (1.6).

18. Procédé de mise en fonctionnement d'un codeur rotatif selon la revendication 16 ou 17, dans lequel, lors d'une rotation relative des deux composants (1, 2) d'un tour, sans superposition des points de départ et d'arrivée, deux ou quatre impulsions de comptage (P) sont générées.

19. Procédé de mise en fonctionnement d'un codeur rotatif selon l'une quelconque des revendications 16 à 18, dans lequel le capteur de déclenchement (1.1) comprend un fil à impulsions et un aimant de réinitialisation (1.2) et l'aimant de réinitialisation (1.2) est orienté de manière à présenter une composante de direction parallèle à l'extension longitudinale du fil à impulsions, et une impulsion de tension est générée par le fil à impulsions au moyen du deuxième aimant (2.2, 2.5) et du troisième aimant (2.3, 2.6) alors qu'un déclenchement de l'impulsion de tension par le fil à impulsions n'est pas effectué par le premier aimant (2.1, 2.4).

20. Procédé de mise en fonctionnement d'un codeur rotatif selon la revendication 19, dans lequel le contenu en énergie de l'impulsion de tension est utilisé pour générer une impulsion de comptage (P) et stocker un état de comptage dans un élément de mémoire non volatile (1.6).

FIG. 1

# FIG. 2a

$n = 1$
$v = 0°$
$S1.3_1 = 0$
$S1.4_1 = 1$

FIG. 2b

n = 2
$\nu \approx 60°$
$S1.3_2 = 1$
$S1.4_2 = 1$

# FIG. 2c

$n = 3$
$v \approx 180°$
$S1.3_3 = 0$
$S1.4_3 = 1$

FIG. 3a

FIG. 3b

FIG. 3c

FIG. 4

EP 2 023 093 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004062448 A1
- EP 0724712 B1